# EUROPÄISCHE PATENTSCHRIFT

(11) **EP 1 097 623 B1**
(45) Veröffentlichungstag und Bekanntmachung des Hinweises auf die Patenterteilung: **24.09.2003**
(21) Anmeldenummer: 00123630.6
(22) Anmeldetag: 30.10.2000
(51) Int. Cl.: A01C 17/00

(54) **Zentrifugaldüngerstreuer**
Spinning fertilizer distributor
Distributeur centrifuge d'engrais

(30) Priorität: 04.11.1999 DE 19953074
(43) Veröffentlichungstag der Anmeldung: 09.05.2001
(73) Patentinhaber: Amazonen-Werke H. Dreyer GmbH & Co. KG, 49205 Hasbergen (DE)
(72) Erfinder: Dreyer, Justus, Dipl.-Ing., 49205 Hasbergen (DE); Scheufler, Bernd, Dr., Ing., 49205 Hasbergen (DE)

(56) Entgegenhaltungen:
- EP-A- 0 511 714
- EP-A- 0 820 689
- DE-A- 4 340 185
- US-A- 4 497 446

## Beschreibung

Die Erfindung betrifft einen Zentrifugaldüngerstreuer entsprechend dem Oberbegriff des Anspruchs 1.

Durch die EP-05 11 714 A2 ist ein Zentrifugaldüngerstreuer mit einem Rahmen und einem zumindest ein Dosierorgan aufweisenden Vorratsbehälter bekannt. Von dem Vorratsbehälter aus wird das Material in einstellbaren Mengen zumindest einer Wurfschaufel aufweisenden Schleuderscheibe zugeführt. Die Schleuderscheibe bildet den unteren Boden des Vorratsbehälters. Oberhalb der rotierenden Schleuderscheibe ist ein zylindrischer Raum mit in der Ringwand dieses Raumes angeordneten Durchtrittsöffnung für das Material aus dem Vorratsbehälter zu den Wurfschaufeln angeordnet. Die Durchtrittsgröße der Durchtrittsöffnung ist mittels eines Ringschiebers einstellbar.

Der Erfindung liegt die Aufgabe zugrunde, einen Zentrifugaldüngerstreuer zu schaffen, bei welchem eine gute Dosierung und eine materialschonende Einleitung des Materials in die Wurfschaufeln erreicht wird.

Diese Aufgabe wird durch die Merkmale des Patentanspruches 1 gelöst. Infolge dieser Maßnahmen wird das von dem Dosierorgan dosierte Material in den zylindrischen Beschleunigungsraum eingegeben. In dem Vorbeschleunigungsraum wird das Material aufgrund der Zentrifugalkraft nach außen gefördert und vorbeschleunigt, anschließend durchtritt das Material die in der Außenwand angeordnete Durchtrittsöffnung und gelangt vorbeschleunigt in die an der Außenwand unmittelbar beginnenden und umlaufenden Wurfschaufeln. Hierbei beschleunigen die auf dem rotierenden Boden des Vorbeschleunigungsraumes angeordneten Beschleunigungsschaufeln das Gut und leiten es beim Durchtritt durch die Durchtrittsöffnung vorbeschleunigt in die Wurfschaufeln. Somit wird eine schonende Einleitung des Materials in die Wurfschaufeln erreicht.

Damit jeder Wurfschaufel die gleiche Menge auszubringenden Materials in gleicher Weise vorbeschleunigt zugeführt wird, ist vorgesehen, daß die gleiche Anzahl von Beschleunigungsschaufeln und Wurfschaufeln vorgesehen ist. Somit ist jeder Wurfschaufel eine Vorbeschleunigungsschaufel zugeordnet.

Um die Lage des Streusektors einstellen und damit eine gleichmäßige Düngerverteilung über die Arbeitsbreite erreichen, unterschiedliche Arbeitsbreitenbereiche und -breiten einstellen sowie sich an die Streueigenschaften des auszubringenden Materials anpassen zu können, damit immer eine gleichmäßige Düngerverteilung erzielt wird, ist vorgesehen, daß die Ringwand des Vorbeschleunigungsraumes mittels Einstellelementen um die Zentrumsachse des Vorbeschleunigungsraumes verdrehbar und in verschiedenen Positionen einstellbar ist.

Eine besonders gute Einleitung des Materials in die Wurfschaufeln wird dadurch erreicht, daß der innere, dem Beschleunigungsraum benachbarte Bereich der Wurfschaufeln auf der der Drehrichtung zugewandten Seite konkav verlaufend ausgebildet ist. Hierbei ist der innere Bereich der Wurfschaufeln in Drehrichtung der Schleuderscheibe gegenüber den übrigen, zumindest annähernd geradlinig verlaufenden Bereich gekrümmt ausgebildet.

Eine gute Beschleunigung des Materials durch die Beschleunigungsschaufeln wird dadurch erreicht, daß die Beschleunigungsschaufeln gekrümmt ausgebildet sind. Hierbei können je nach Erfordernis, die Beschleunigungsschaufeln auf ihrer in Drehrichtung verlaufenden Seite zumindest teilweise konvex, konkav oder S-förmig verlaufend ausgebildet sein. Auch ist es möglich, daß in einigen Fällen die Beschleunigungsschaufeln auf ihrer in Drehrichtung verlaufenden Seite zumindest teilweise geradlinig verlaufend ausgebildet sind.

Ein sehr guter Materialfluß vom Zentrum des Vorbeschleunigungsraumes zu der Durchtrittsöffnung wird dadurch erreicht, daß der Boden des Vorbeschleunigungsraumes von dem Zentrum nach außen abfallend ausgebildet ist. Hierbei hat sich als vorteilhaft gezeigt, daß die Oberseite der Beschleunigungsschaufel vom Zentrum des Beschleunigungsraumes nach außen abfallend verlaufen sollte.

Um eine gute Übergabe des Materials von der Vorbeschleunigungsschaufel in die Wurfschaufel zu gewährleisten, ist vorgesehen, daß das jeweilige Ende der Beschleunigungsschaufel gegenüber dem Anfang der zugeordneten Wurfschaufel vorlaufend angeordnet ist.

Um einen konzentrierten Düngeraustritt entsprechend der ausgebrachten Menge jeweils zu gewährleisten, ist vorgesehen, daß die Durchtrittsöffnung in der Wand des Vorbeschleunigungsraumes in ihrer Größe mittels Einstellmitteln einstellbar ist.

Um eine Vergleichmäßigung schwierig auszubringender und zu dosierender Materialien zu erreichen, ist in einer Ausführungsform vorgesehen, daß innerhalb des Vorbeschleunigungsraumes eine zylindrische Vergleichmäßigungskammer angeordnet ist, daß in der Wand der Vergleichmäßigungskammer zumindest eine Durchtrittsöffnung zum Vorbeschleunigungsraum angeordnet ist. Hierdurch wird der Düngerstrom innerhalb der Vergleichmäßigungskammer zunächst vergleichmäßigt, so daß ein gleichmäßiger Düngerstrom jeder Vorbeschleunigungsschaufel, wobei zwei benachbarte Vorbeschleunigungsschaufeln jeweils eine Vorbeschleunigungskammer bilden, die gleiche Materialmenge zugeführt wird, so daß eine gleichmäßige Düngerverteilung auch in Fahrtrichtung des Zentrifugaldüngerstreuers gewährleistet ist. Jede Vergleichmäßigungsschaufel und jede Wurfschaufel erhält dann die gleiche Materialmenge.

Um insbesondere beim Ausbringen von druckempfindlichen Düngersorten große Wurfweiten erreichen sowie große Arbeitsbreiten und/oder große Überlappungszonen verwirklichen zu können, ist vorgesehen, daß mehrere Vorbeschleunigungsräume, die jeweils durch mindestens eine Durchtrittsöffnung aufweisende Ringwände voneinander getrennt sind, vorgesehen sind, in welchen jeweils rotierend angetriebene Beschleunigungsschaufeln angeordnet sind. Infolge der mehreren Vorbeschleunigungsstufen wird eine schonende Beschleunigung der Düngerkörner auf hohe Abwurfgeschwindigkeiten erreicht. Hierdurch sind sehr große Wurfweiten auch bei druckempfindlichen Düngersorten mit relativ kurzen Wurfschaufeln möglich.

Weitere Einzelheiten der Erfindung sind den übrigen Unteransprüchen, der Beispielsbeschreibung und den Zeichnungen zu entnehmen. Hierbei zeigen
- Fig.1: einen Schleuderdüngerstreuer in Seitenansicht und in Prinzipdarstellung,
- Fig.2: den unteren Bereich der Vorbeschleunigungseinheit mit Schleuderscheibe in Seitenansicht und einem größeren Maßstab,
- Fig.3: die Vorbeschleunigungseinheit mit Schleuderscheibe im Teilschnitt,
- Fig.4: die Vorbeschleunigungseinheit mit Schleuderscheibe in der Ansicht IV-IV,
- Fig.5: eine weitere Vorbeschleunigungseinheit in der Ansicht IV-IV,
- Fig.6: eine weitere Vorbeschleunigungseinheit in der Darstellungsweise gemäß Fig.3 und
- Fig.7: die Vorbeschleunigungseinheit mit Schleuderscheibe gemäß Fig.6.

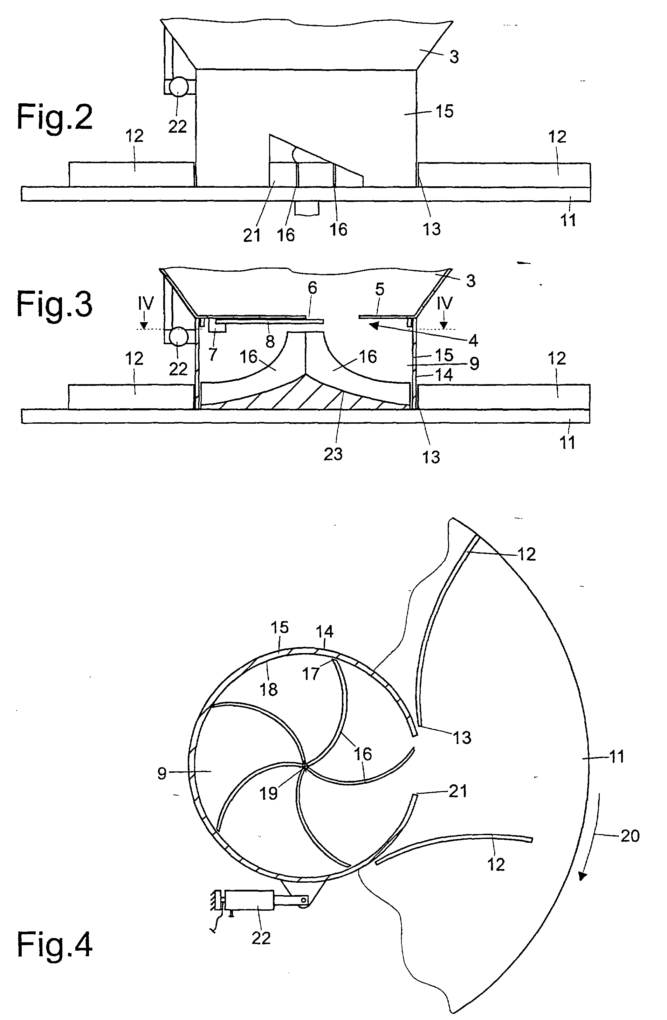

Der Schleuderdüngerstreuer weist den Rahmen 1 auf, der an seiner Vorderseite Dreipunktkupplungselemente 2 zum Anbau an den Dreipunktkraftheber eines Schleppers aufweist. An dem Rahmen 1 des Schleuderstreuers ist der Vorratsbehälter 3 angeordnet, dessen unteres trichterförmiges Ende mittels eines Dosierorgans 4, welches zumindest eine in einer Bodenplatte 5 angeordnete Auslauföffnung 6 und einen zugeordneten, mittels Einstellelemente 7 einstellbaren Schieber 8 aufweist, abgeschlossen ist. Unterhalb des Dosierorgans 4 ist ein zylindrischer Vorbeschleunigungsraum 9, dessen Ausbildung und Wirkungsweise weiter unten erläutert wird, angeordnet. Der Boden des Vorbeschleunigungsraumes 9 wird von der mittels einer Antriebseinrichtung 10 rotierend angetriebenen Schleuderscheibe 11 gebildet. Auf der Schleuderscheibe 11 sind Wurfschaufeln 12 angeordnet, deren inneren Enden 13 unmittelbar an der Außenwand 14 der Ringwand 15 des Vorbeschleunigungsraumes 9 beginnen. Die Wurfschaufeln 12 weisen unterschiedliche wirksame Längen auf, um unterschiedliche Streubereiche des Streufächers abzudecken, damit eine gleichmäßige Düngerverteilung über die Arbeitsbreite erreicht wird. Die Schleuderscheibe 11 weist einen wesentlich größeren Durchmesser als der Vorbeschleunigungsraum 9 auf, so daß die Schleuderscheibe 11 den Raum 9 nach außen entsprechend überragt. Wie die Fig.3 und 4 zeigen, sind innerhalb des Vorbeschleunigungsraumes 9 auf der Schleuderscheibe 11, die in diesem Bereich den Boden des Vorbeschleunigungsraumes 9 bildet, eine der Wurfschaufeln 12 entsprechende Anzahl von Beschleunigungsschaufeln 16, die mit ihren äußeren Enden 17 bis an die Innenwand 18 der Ringwand 15 des zylindrischen Vorbeschleunigungsraumes 9 heranreichen, angeordnet. Hierbei sind die Vorbeschleunigungsschaufeln 16 derart angeordnet, daß ihre äußeren Enden 17 gegenüber den inneren Enden 13 der jeweils zugeordneten Wurfschaufel 12 vorlaufend positioniert sind. Die Zentrumsachse 19 des Vorbeschleunigungsraumes 9 fällt mit der Drehachse der Schleuderscheibe 11 zusammen. In dem dargestellten Ausführungsbeispiel sind die Vorbeschleunigungsschaufeln 16 auf ihren in Drehrichtung 20 der Schleuderscheibe 11 vorlaufenden Seite konvex verlaufend ausgebildet, während der innere, dem Vorbeschleunigungsraum 9 benachbarte Bereich der Wurfschaufeln 12 auf der der Drehrichtung 20 zugewandten Seite konkav verlaufend ausgebildet sind. In der Ringwand 15 des Vorbeschleunigungsraumes 9 ist die Durchtrittsöffnung 21 angeordnet, durch welche das im Vorbeschleunigungsraum 9 beschleunigte Material von Beschleunigungsschaufeln 16 zu den Wurfschaufeln 12 durchtreten kann und somit übergeben wird. Es ist auch möglich, mehrere Durchtrittsöffnungen 21 vorzusehen, wobei in bevorzugter Weise diese verschiedenen Durchtrittsöffnungen mittels Schieberelementen zu verschließen und zu öffen sowie mit verschiedenen Durchtrittsquerschnitten einzustellen sind. Hierdurch läßt sich unter Umständen eine verbesserte Materialverteilung erzielen.

Die Ringwand 15 des Vorbeschleunigungsraumes 9 ist mittels Einstellmitteln 22, die zwischen der Ringwand 15 des Vorbescheunigungsraumes 9 und dem Vorratsbehälter 3 bzw. dem Rahmen 1 des Schleuderdüngerstreuers angeordnet sind, um die Achse 19 verdrehbar, so daß die Lage der Durchtrittsöffnung 21 gegenüber der Schleuderscheibe 11 und dem Vorratsbehälter 3 bzw. dem Rahmen 1 der Maschine verstellbar ist, um so die Lage der Streufächer und somit den Abwurfbeginn des Materials durch die Wurfschaufeln 12 einstellen zu können, um entsprechend den jeweiligen Streueigenschaften des Materials die Maschine entsprechend einstellen zu können, damit die gewünschte gleichmäßige oder eine andere gewünschte Verteilung des Materials eingestellt und erreicht werden kann. Hierbei können diese Einstellmittel 22 über eine elektronische Regelund Steuereinrichtung angesteuert werden.

Der Boden 23 des Vorbeschleunigungsraumes 9 verläuft, wie Fig.3 zeigt, durch eine entsprechende Ausgestaltung der Schleuderscheibe 11 vom Zentrum nach außen abfallend. Hierbei kann der Boden 23 gekrümmt oder geradlinig verlaufen. Die Oberseite der Beschleunigungsschaufeln 16 verläuft vom Zentrum des Beschleunigungsraumes 9 nach außen abfallend. Hierbei kann die Oberseite geradlinig oder gekrümmt abfallend verlaufen.

Die Funktionsweise des Schleuderstreuers ist folgende:

Das sich im Vorratsbehälter 3 befindliche Material gelangt über die in ihrer Durchflußgröße mittels des Schiebers 8 einstellbaren Auslauföffnungen 6 in den Vorbeschleunigungsraum 9. Der Schieber 8 ist mittels der Einstellmittel 7 einstellbar, so daß in gewünschter Weise die Durchflußgröße, um die gewünschte Materialmenge ausbringen zu können, in geeigneter Weise einzustellen ist. Das Material gelangt in den Vorbeschleunigungsraum 9 und wird von den Vorbeschleunigungsschaufeln 16 erfaßt und aufgrund der Zentrifugalkraft nach außen gefördert und beschleunigt. Die jeweilige Vorbeschleunigungsschaufel 16 übergibt das vorbeschleunigte Material durch die Durchtrittsöffnung 21 in weicher Weise an die zugeordnete Wurfschaufel 12. Durch die Rotation der Wurfschaufeln 12 wird das Material auf die erforderliche Abwurfgeschwindigkeit beschleunigt und am Ende der Wurfschaufel 12 an deren Abwurfende abgeschleudert und in Breitverteilung auf der Bodenoberfläche in Form eines Streufächers verteilt.

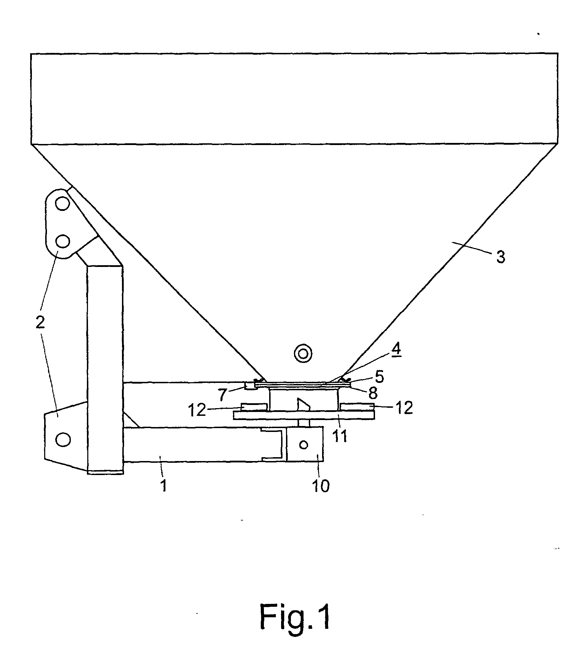

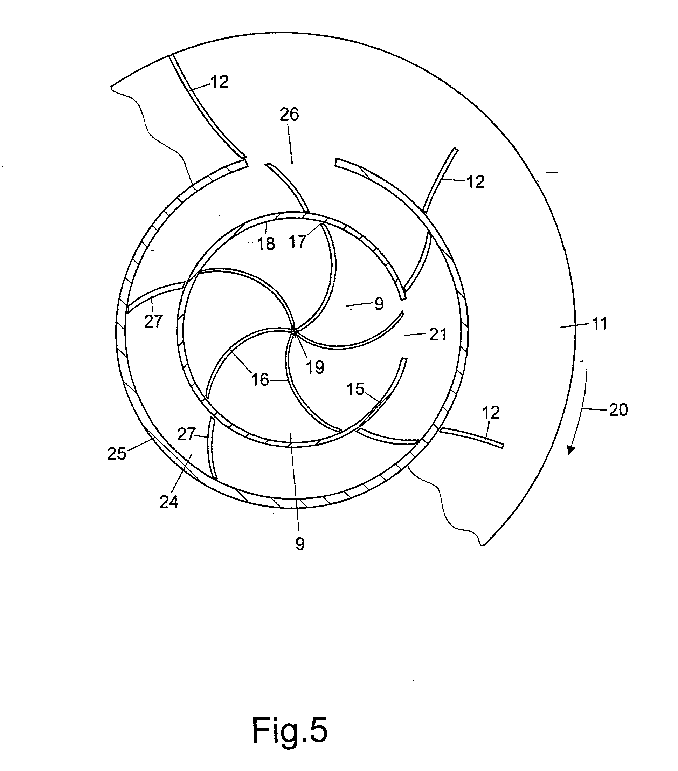

Das Ausführungsbeispiel gemäß Fig.5 unterscheidet sich von dem Ausführungsbeispiel gemäß den Fig.1 bis 4 dadurch, daß um den ersten Vorbeschleunigungsraum 9 herum ein zweiter ringförmiger Vorbeschleunigungsraum 24, der durch die zylindrische Wand 25 gebildet wird, angeordnet ist. In der Ringwand 25 dieses weiteren Vorbeschleunigungsraumes 24 ist die Durchtrittsöffnung 26 angeordnet. Den Boden des zweiten Vorbeschleunigungsraumes 24 bildet die Schleuderscheibe 11. Auf dem Boden des zweiten Vorbeschleunigungsraumes 24 sind die Vorbeschleunigungsschaufeln 27 innerhalb des Vorbeschleunigungsraumes 24 angeordnet.

Die Funktionsweise dieser Vorbeschleunigungsräume des Schleuderdüngerstreuers ist folgende:

Das Material wird wiederum in den inneren Vorbeschleunigungsraum 9, wie zu den Fig.1 bis 4 beschrieben ist, gegeben. Bevor das Material dann zu den Wurfschaufeln 12 der Schleuderscheibe 11 gelangt, wird das Material über die in der ersten Ringwand 15 angeordnten Durchtrittsöffnung 21 in den zweiten Vorbeschleunigungsraum 24 übergeben und dort jeweils von der zugeordneten Vorbeschleunigungsschaufel 27 weich erfaßt. Dieses Material wird von der Vorbeschleunigungsschaufel 27 im Vorbeschleunigungsraum 24 weiterbeschleunigt und somit erhält es eine höhere Geschwindigkeit. Das weiterbeschleunigte Material wird durch die Beschleunigungsschaufel 27 des zweiten Vorbeschleunigungsraumes 24 durch die Durchtrittsöffnung 26 an die Wurfschaufel 12 der Schleuderscheibe 11 übergeben und von dieser Wurfschaufel 12 bis auf die Abwurfgeschwindigkeit beschleunigt und dann am Abwurfende der Wurfschaufel 12 abgeworfen. Falls es für durckempfindliche Dünger erforderlich sein sollte, ist es ohne weiteres möglich, auch einen dritten oder weiteren Vorbeschleunigungsraum um die jeweiligen inneren Vorbeschleunigungsräume anzuordnen, so daß das Material in noch schonenderer Weise beschleunigt wird. Die Übergabe von dem einen zu dem anderen Vorbeschleunigungsraum erfolgt dann jeweils in der vorbeschriebenen Weise.

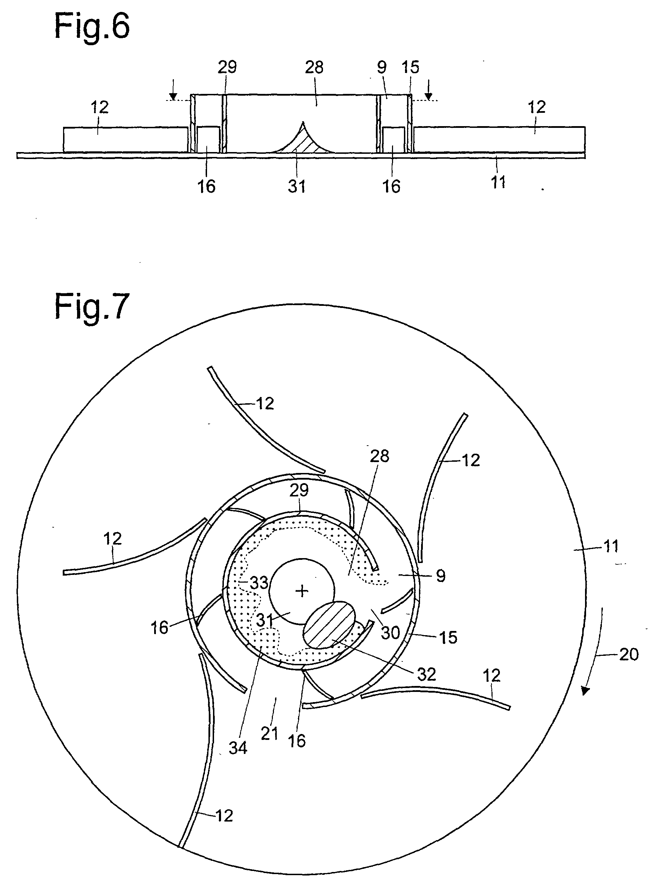

Das Ausführungsbeispiel gemäß den Fig.6 und 7 unterscheidet sich von den vorherstehenden Ausführungsbeispielen dadurch, daß innerhalb des Vorbeschleunigungsraumes 9 eine zylindrische Vergleichmäßigungskammer 28 angeordnet ist. Die Ringwand 29 der Vergleichmäßigungskammer 28 weist zumindest eine Durchtrittsöffnung 30 zu dem sich anschließenden Vorbeschleunigungsraum 9, der von der Ringwand 15 gebildet wird, angeordnet ist. In der Mitte der Vergleichmäßigungskammer 28 ist die kegelförmige Erhöhung 31 angeordnet, um eine gezielte Leitung des Materials von der Mitte nach außen einzuleiten. Wenn die Vergleichmäßigungskammer 28 eine ausreichende Größe aufweist, ist es nicht unbedingt erforderlich, die kegelförmige Erhöhung 31 vorzusehen.

Die Funktionsweise der Vergleichmäßigungskammer 28 in Verbindung mit der Vorbeschleunigungskammer 9 gemäß den Fig.6 und 7 ist folgende:

Das Material wird, wie eingangs beschrieben, aus dem Vorratsbehälter 3 über die Dosiereinrichtung 4 dosiert. Das so dosierte Material gelangt, wie durch die Ellipsefläche 32 (sogenannte Aufgabefläche) gekennzeichnet ist, in die Vergleichmäßigungskammer 28. Aufgrund der Rotation des Bodens (von der Schleuderscheibe 11 gebildet) der Vergleichmäßigungskammer 28 das Material von dem Boden mitgerissen und vergleichmäßigt, wie durch die strichpunktierte Linie 33 und den angedeuteten Bereich 34, der gepunktet ist, vergleichmäβigt und gelangt somit in einem gleichmäßigen Strom über die Durchtrittsöffnung 30 in den Vorbeschleunigungsraum 9. Hier wird dieser vergleichmäßigte Materialstrom jeweils von der Vorbeschleunigungsschaufel 16, die auf der Schleudersche-be 11 angeordnet ist und um die Drehachse rotierend umläuft, vorbeschleunigt und durch die Durchtrittsöffnung 21 in der Ringwand 15 des Vorbeschleunigungsraumes 9 an die Wurfschaufel 12 der Schleuderscheibe 11 übergeben.

## Patentansprüche

1. Zentrifugaldüngerstreuer mit einem Rahmen (1) und einem zumindest ein Dosierorgan (4) aufweisenden Vorratsbehälter (3), von dem aus das Material in einstellbaren Mengen zumindest einer Wurfschaufeln (12) aufweisenden Schleuderscheibe (11) zugeführt wird, wobei unterhalb des Dosierorgans (4) zumindest ein zylindrischer Vorbeschleunigungsraum (9) mit einem um das Zentrum (19) des Vorbeschleunigungsraumes (9) rotierenden Boden angeordnet ist, wobei die Wurfschaufeln (12) mit ihren inneren Enden (13) unmittelbar an der Außenwand (14) des Vorbeschleunigungsraumes (9, 24) beginnen, **dadurch gekennzeichnet, daß** auf dem rotierenden Boden des Vorbeschleunigungsraumes (9, 24) Beschleunigungsschaufeln (16, 27), deren äußeren Enden (17) bis an die Innenwand (18) des Vorbeschleunigungsraumes (9, 24) heranreichen, angeordnet sind.

2. Zentrifugaldüngerstreuer nach Anspruch 1, **dadurch gekennzeichnet, daß** die gleiche Anzahl von Beschleunigungsschaufeln (16, 27) und Wurfschaufeln (12) vorgesehen ist.

3. Zentrifugaldüngerstreuer nach Anspruch 1, **dadurch gekennzeichnet, daß** jeder Wurfschaufel (12) eine Vorbeschleunigungsschaufel (16, 27) zugeordnet ist.

4. Streuer nach einem oder mehreren der vorstehenden Ansprüche, **dadurch gekennzeichnet, daß** in der Ringwand (15, 25) des Vorbeschleunigungsraumes (9, 24) zumindest eine Durchtrittsöffnung (21, 26) angeordnet ist.

5. Streuer nach einem oder mehreren der vorstehenden Ansprüche, **dadurch gekennzeichnet, daß** die Ringwand (15, 25) des Vorbeschleunigungsraumes (9, 24) mittels Einstellelementen (22) um die Zentrumsachse (19) des Vorbeschleunigungsraumes (9, 24) verdrehbar und in verschiedenen Positionen einstellbar ist.

6. Streuer nach einem oder mehreren der vorstehenden Ansprüche, **dadurch gekennzeichnet, daß** die Zentrumsachse (19) des Vorbeschleunigungsraumes (9, 24) mit der Drehachse der Schleuderscheibe (11) zusammenfällt.

7. Schleuderstreuer nach einem oder mehreren der vorstehenden Ansprüche, **dadurch gekennzeichnet, daß** der innere, dem Vorbeschleunigungsraum (9, 24) benachbarte Bereich der Wurfschaufeln (12) auf der der Drehrichtung (20) zugewandten Seite konkav verlaufend ausgebildet ist.

8. Streuer nach einem oder mehreren der vorstehenden Ansprüche, **dadurch gekennzeichnet, daß** der innere Bereich der Wurfschaufeln in Drehrichtung der Schleuderscheibe gegenüber dem übrigen, zumindest annähernd geradlinig verlaufenden Bereich gekrümmt ausgebildet ist.

9. Streuer nach einem oder mehreren der vorstehenden Ansprüche, **dadurch gekennzeichnet, daß** die Beschleunigungsschaufeln gekrümmt ausgebildet sind, daß die Beschleunigungsschaufeln auf ihrer in Drehrichtung verlaufenden Seite zumindest teilweise konvex verlaufend ausgebildet sind.

10. Streuer nach einem oder mehreren der vorstehenden Ansprüche, **dadurch gekennzeichnet, daß** die Beschleunigungsschaufeln gekrümmt ausgebildet sind, daß die Beschleunigungsschaufeln auf ihrer in Drehrichtung verlaufenden Seite zumindest teilweise konkav verlaufend ausgebildet sind.

11. Streuer nach einem oder mehreren der vorstehenden Ansprüche, **dadurch gekennzeichnet, daß** die Beschleunigungsschaufeln gekrümmt ausgebildet sind, daß die Beschleunigungsschaufeln auf ihrer in Drehrichtung verlaufenden Seite S-förmig verlaufend ausgebildet sind.

12. Streuer nach einem oder mehreren der vorstehenden Ansprüche, **dadurch gekennzeichnet, daß** die Beschleunigungsschaufeln auf ihrer in Drehrichtung verlaufenden Seite zumindest teilweise geradlinig verlaufend ausgebildet sind.

13. Streuer nach einem oder mehreren der vorstehenden Ansprüche, **dadurch gekennzeichnet, daß** der Boden (23) des Vorbeschleunigungsraumes (9, 24) von dem Zentrum nach außen abfallend ausgebildet ist.

14. Streuer nach einem oder mehreren der vorstehenden Ansprüche, **dadurch gekennzeichnet, daß** der Boden (23) des Vorbeschleunigungsraumes (9, 24) kegelförmig ausgebildet ist.

15. Streuer nach einem oder mehreren der vorstehenden Ansprüche, **dadurch gekennzeichnet, daß** die Oberseite der Vorbeschleunigungsschaufeln (16) vom Zentrum des Beschleunigungsraumes (9) nach außen abfallend verlaufen.

16. Streuer nach einem oder mehreren der vorstehenden Ansprüche, **dadurch gekennzeichnet, daß** das jeweilige Ende der Vorbeschleunigungsschaufel (16, 27) gegenüber dem Anfang der zugeordneten Wurfschaufel (12) vorlaufend angeordnet ist.

17. Streuer nach einem oder mehreren der vorstehenden Ansprüche, **dadurch gekennzeichnet, daß** die Durchtrittsöffnung (21, 26) in der Wand des Vorbeschleunigungsraumes (9, 24) in ihrer Größe mittels Einstellmittel einstellbar ist.

18. Streuer nach einem oder mehreren der vorstehenden Ansprüche, **dadurch gekennzeichnet, daß** innerhalb des Vorbeschleunigungsraumes (9) eine zylindrische Vergleichmäßigungskammer (28) angeordnet ist, daß in der Wand (29) der Vergleichmäßigungskammer (28) zumindest eine Durchtrittsöffnung (30) zum Vorbeschleunigungsraum (9) angeordnet ist.

19. Streuer nach einem oder mehreren der vorstehenden Ansprüche, **dadurch gekennzeichnet, daß** mehrere Vorbeschleunigungsräume (9, 24), die jeweils durch mindestens eine Durchtrittsöffnung (21, 26) aufweisende Ringwände (15, 25) voneinander getrennt sind, vorgesehen sind, in welchen jeweils Beschleunigungsschaufeln (16, 27) angeordnet sind.

## Claims

1. Centrifugal fertiliser spreader, having a frame (1) and a hopper (3), which includes at least one metering member (4), and from which hopper the material is supplied in adjustable quantities to at least one centrifugal disc (11), which has throwing vanes (12), at least one cylindrical pre-acceleration chamber (9), having a base which rotates about the centre (19) of the pre-acceleration chamber (9), being disposed beneath the metering member (4), the throwing vanes (12) beginning with their inner ends (13) directly at the exterior wall (14) of the pre-acceleration chamber (9, 24), **characterised in that** acceleration vanes (16, 27) are disposed on the rotating base of the pre-acceleration chamber (9, 24), the outer ends (17) of said vanes extending to the interior wall (18) of the pre-acceleration chamber (9, 24).

2. Centrifugal fertiliser spreader according to claim 1, **characterised in that** the same number of acceleration vanes (16, 27) and throwing vanes (12) is provided.

3. Centrifugal fertiliser spreader according to claim 1, **characterised in that** a pre-acceleration vane (16, 27) is associated with each throwing vane (12).

4. Spreader according to one or more of the preceding claims, **characterised in that** at least one through-aperture (21, 26) is disposed in the annular wall (15, 25) of the pre-acceleration chamber (9, 24).

5. Spreader according to one or more of the preceding claims, **characterised in that** the annular wall (15, 25) of the pre-acceleration chamber (9, 24) is rotatable about the centre axis (19) of the pre-acceleration chamber (9, 24) by means of adjustment members (22) and is adjustable in various positions.

6. Spreader according to one or more of the preceding claims, **characterised in that** the centre axis (19) of the pre-acceleration chamber (9, 24) coincides with the axis of rotation of the centrifugal disc (11).

7. Centrifugal spreader according to one or more of the preceding claims, **characterised in that** the inner region of the throwing vanes (12), adjacent the pre-acceleration chamber (9, 24), is configured to extend in a concave manner on the side facing the direction of rotation (20).

8. Spreader according to one or more of the preceding claims, **characterised in that** the inner region of the throwing vanes is curved, when viewed with respect to the direction of rotation of the centrifugal disc, compared with the remaining region which extends at least approximately rectilinearly.

9. Spreader according to one or more of the preceding claims, **characterised in that** the acceleration vanes are curved, and **in that** the acceleration vanes are configured to extend at least partially in a convex manner on their side extending in the direction of rotation.

10. Spreader according to one or more of the preceding claims, **characterised in that** the acceleration vanes are curved, and **in that** the acceleration vanes are configured to extend at least partially in a concave manner on their side extending in the direction of rotation.

11. Spreader according to one or more of the preceding claims, **characterised in that** the acceleration vanes are curved, and **in that** the acceleration vanes are configured to extend in an S-shaped manner on their side extending in the direction of rotation.

12. Spreader according to one or more of the preceding claims, **characterised in that** the acceleration vanes are configured to extend at least partially rectilinearly on their side extending in the direction of rotation.

13. Spreader according to one or more of the preceding claims, **characterised in that** the base (23) of the pre-acceleration chamber (9, 24) is configured so as to descend outwardly from the centre.

14. Spreader according to one or more of the preceding claims, **characterised in that** the base (23) of the pre-acceleration chamber (9, 24) has a conical configuration.

15. Spreader according to one or more of the preceding claims, **characterised in that** the upper surfaces of the pre-acceleration vanes (16) extend so as to descend outwardly from the centre of the acceleration chamber (9).

16. Spreader according to one or more of the preceding claims, **characterised in that** the respective end of the pre-acceleration vane (16, 27) is disposed so as to precede the beginning of the associated throwing vane (12).

17. Spreader according to one or more of the preceding claims, **characterised in that** the through-aperture (21, 26) in the wall of the pre-acceleration chamber (9, 24) is adjustable in respect of its size by means of adjusting means.

18. Spreader according to one or more of the preceding claims, **characterised in that** a cylindrical homogenising chamber (28) is disposed internally of the pre-acceleration chamber (9), and **in that** at least one through-aperture (30), leading to the pre-acceleration chamber (9), is disposed in the wall (29) of the homogenising chamber (28).

19. Spreader according to one or more of the preceding claims, **characterised in that** a plurality of pre-acceleration chambers (9, 24) are provided, which are each separated from one another by annular walls (15, 25) having at least one through-aperture (21, 26), acceleration vanes (16, 27) being respectively disposed in said walls.

## Revendications

1. Distributeur centrifuge d'engrais avec un châssis (1) et une trémie d'alimentation (3) présentant au moins un système de dosage (4), amenant la matière en quantité réglable par au moins un disque centrifuge (11) présentant des pales d'éjection (12), avec au moins un compartiment cylindrique de pré-accélération (9) disposé en dessous du système de dosage (4), avec un fond en rotation autour du centre (19) du compartiment de pré-accélération (9), les pales d'éjection (12) commençant avec leurs extrémités intérieures (13) directement contre la paroi extérieure (14) du compartiment de pré-accélération (9, 24),
**caractérisé en ce que**
sur le fond en rotation du compartiment de pré-accélération (9, 24) sont disposées des pales d'accélération (16, 27) dont les extrémités extérieures (17) atteignent la paroi intérieure (18) du compartiment de pré-accélération (9, 24).

2. Distributeur centrifuge d'engrais selon la revendication 1,
**caractérisé en ce qu'**
on prévoit le même nombre de pales d'accélération (16, 27) que de pales d'éjection (12).

3. Distributeur centrifuge d'engrais selon la revendication 1,
**caractérisé en ce qu'**
à chaque pale d'éjection (12) est associée une pale de pré-accélération (16, 27).

4. Distributeur selon l'une ou plusieurs des revendications précédentes.
**caractérisé en ce que**
la paroi annulaire (15, 25) du compartiment de pré-accélération comporte (9, 24) au moins une ouverture de passage (21, 26).

5. Distributeur selon l'une ou plusieurs des revendications précédentes,
**caractérisé en ce que**
la paroi annulaire (15, 25) du compartiment de pré-accélération (9, 24) est mobile au moyen d'éléments de réglage (22) autour de l'axe central (19) du compartiment de pré-accélération (9, 24) et réglable sous différentes positions.

6. Distributeur selon l'une ou plusieurs des revendications précédentes,
**caractérisé en ce que**
l'axe central (19) du compartiment de pré-accélération (9, 24) coïncide avec l'axe de rotation du disque centrifuge (11).

7. Distributeur centrifuge selon l'une ou plusieurs des revendications précédentes,
**caractérisé en ce que**
la partie intérieure des pales d'éjection (12) à proximité du compartiment de pré-accélération (9, 24) est configurée en étendue concave sur la face tournée dans le sens de rotation (20).

8. Distributeur selon l'une ou plusieurs des revendications précédentes,
**caractérisé en ce que**
la partie intérieure des pales d'éjection est configurée courbée dans le sens de rotation du disque centrifuge par rapport au moins à l'autre partie toute droite à proximité.

9. Distributeur selon l'une ou plusieurs des revendications précédentes,
**caractérisé en ce que**
les pales d'accélération sont courbées, en étant convexes au moins en partie sur leur face s'étendant dans le sens de rotation.

10. Distributeur selon l'une ou plusieurs des revendications précédentes,
**caractérisé en ce que**
les pales d'accélération sont courbées, en étant concaves au moins en partie sur leur face s'étendant dans le sens de rotation.

11. Distributeur selon l'une ou plusieurs des revendications précédentes,
**caractérisé en ce que**
les pales d'accélération sont courbées, en forme de S sur leur face s'étendant dans le sens de rotation.

12. Distributeur selon l'une ou plusieurs des revendications précédentes,
**caractérisé en ce que**
les pales d'accélération sont configurées au moins en partie droites sur leur face s'étendant dans le sens de rotation.

13. Distributeur selon l'une ou plusieurs des revendications précédentes,
**caractérisé en ce que**
le fond (23) du compartiment de pré-accélération (9, 24) est incliné du centre vers l'extérieur.

14. Distributeur selon l'une ou plusieurs des revendications précédentes,
**caractérisé en ce que**
le fond (23) du compartiment de pré-accélération (9, 24) est conique.

15. Distributeur selon l'une ou plusieurs des revendications précédentes,
**caractérisé en ce que**
la face supérieure des pales d'accélération (16) est inclinée du centre du compartiment d'accélération (9) vers l'extérieur.

16. Distributeur selon l'une ou plusieurs des revendications précédentes,
**caractérisé en ce que**
l'extrémité respective de la pale de pré-accélération (16, 27) est disposée contre le début de la pale d'éjection (12) associée.

17. Distributeur selon l'une ou plusieurs des revendications précédentes,
**caractérisé en ce que**
les dimensions de l'ouverture de passage (21, 26) sont réglables dans la paroi du compartiment de pré-accélération (9, 24) au moyen de moyens de réglage.

18. Distributeur selon l'une ou plusieurs des revendications précédentes,
**caractérisé en ce qu'**
à l'intérieur du compartiment de pré-accélération (9) une chambre d'harmonisation cylindrique (28) est disposée, avec sur la paroi (29) de la chambre d'harmonisation (28), au moins une ouverture de passage (30) vers le compartiment de pré-accélération (9).

19. Distributeur selon l'une ou plusieurs des revendications précédentes,
**caractérisé en ce qu'**
plusieurs compartiments de pré-accélération (9, 24) sont respectivement séparés les uns des autres par des parois annulaires (15, 25) présentant au moins une ouverture de passage (21, 26), et sont munis chacun de pales d'accélération (16, 27).
